Europäisches Patentamt

European Patent Office

Office européen des brevets

(19)

(11) Numéro de publication: **0 097 099 B1**

(12) **FASCICULE DE BREVET EUROPEEN**

(45) Date de publication du fascicule du brevet:
**29.01.86**

(51) Int. Cl.⁴: **G 01 P 5/165**

(21) Numéro de dépôt: **83401207.2**

(22) Date de dépôt: **13.06.83**

(54) **Dispositif pour mesurer la vitesse d'écoulement d'un fluide dans l'espace annulaire d'un générateur de vapeur.**

(30) Priorité: **16.06.82 FR 8210497**

(43) Date de publication de la demande:
**28.12.83 Bulletin 83/52**

(45) Mention de la délivrance du brevet:
**29.01.86 Bulletin 86/5**

(84) Etats contractants désignés:
**DE GB IT**

(56) Documents cités:
**DE - C - 963 651**
**GB - A - 274 631**
**GB - A - 893 381**
**US - A - 2 977 794**
**US - A - 4 192 178**

(73) Titulaire: **ELECTRICITE DE FRANCE Service National, 2, rue Louis Murat, F-75008 Paris (FR)**

(72) Inventeur: **Chollet, Christian, 41, rue du Square, F-78390 Bois D'Arcy (FR)**
Inventeur: **David, Jean, 73, Avenue du Général de Gaulle, F-77420 Champs sur Marne (FR)**

(74) Mandataire: **Mongrédien, André et al, c/o BREVATOME 25, rue de Ponthieu, F-75008 Paris (FR)**

## Description

La présente invention a pour objet un dispositif de mesure de la vitesse du fluide dans l'espace annulaire d'un générateur de vapeur permettant notamment de mesurer la vitesse d'écoulement tout près des parois délimitant cet espace annulaire.

Lors de la mise en exploitation des générateurs de vapeur des réacteurs à eau légère pressurisée, des problèmes sont apparus (corrosion, «denting», c'est-à-dire constriction des tubes due à des phénomènes d'oxydation au niveau des plaques entretoises), ces problèmes étant liés en partie aux conditions thermiques et hydrauliques régnant à proximité des tubes échangeurs et des plaques entretoises. Ces conditions dépendent essentiellement de la nature de l'écoulement dans l'espace annulaire du générateur de vapeur, et connaître la nature de cet écoulement est l'un des moyens permettant de mieux comprendre les phénomènes évoqués ci-dessus.

Lorsqu'on cherche à établir la courbe de profil des vitesses dans l'espace annulaire du générateur de vapeur, la principale difficulté est de positionner de façon très précise les points de mesure dans cet espace, en particulier très près des parois afin de déterminer l'épaisseur d'une éventuelle couche laminaire. Or, au cours de la mise en service des générateurs de vapeur et au cours des transitoires d'exploitation, les dilatations instantanées des parois interne et externe peuvent être différentes, ce qui empêche d'effectuer des mesures très près de ces parois, car on risque soit de détruire la sonde, soit de ne pas connaître la distance exacte entre la paroi et le point de mesure.

Ce problème est résolu selon la présente invention grâce à un dispositif qui permet de connaître en permanence la vitesse d'écoulement du fluide tout près des parois du générateur de vapeur, quelles que soient les dilatations thermiques ou les vibrations qu'elles subissent.

Le dispositif objet de l'invention est du type comportant un corps de sonde maintenu fixe par rapport à la paroi ou virole externe du générateur et à l'intérieur duquel est placée la sonde proprement dite, se caractérise en ce qu'il comporte un soufflet élastique entourant la sonde proprement dite et dont une première extrémité est fixée à la sonde proprement dite, tandis que son autre extrémité est fixée au corps de sonde, ledit soufflet étant monté de telle sorte qu'il applique constamment une extrémité de la sonde proprement dite contre la virole interne du générateur.

Selon une caractéristique additionnelle de ce dispositif, un bossage d'instrumentation est fixé sur la virole externe du générateur de vapeur au niveau d'une ouverture pratiquée dans celle-ci, ledit bossage d'instrumentation comportant une ouverture pour le passage de la sonde proprement dite.

Selon une autre caractéristique additionnelle de l'invention, le dispositif comporte des moyens de fixation permettant de fixer le corps de sonde sur le bossage d'instrumentation, ces moyens de fixation comprenant par exemple un presse-étoupe apte à maintenir le corps de sonde à l'intérieur d'un logement ménagé dans le bossage d'instrumentation.

Enfin, selon une dernière caractéristique additionnelle du dispositif objet de l'invention, la sonde proprement dite comporte, au voisinage de son extrémité appliquée contre la virole interne, plusieurs orifices de prise de pression répartis entre la virole interne et la virole externe et plusieurs conduits permettant de relier chaque orifice de prise de pression à un orifice de sortie.

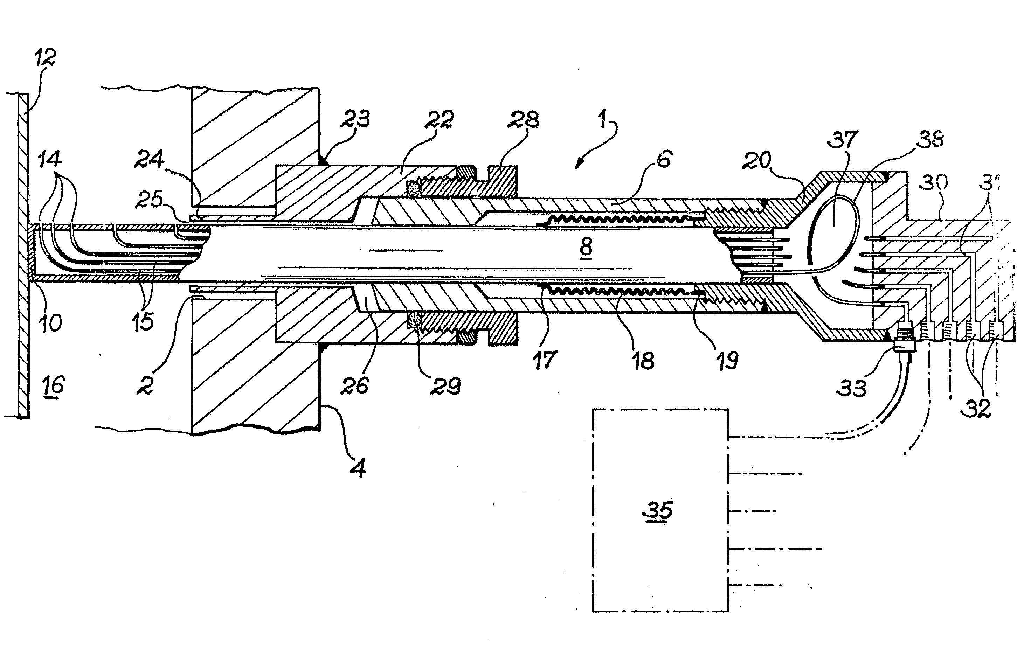

L'invention apparaîtra mieux à la lecture de la description qui va suivre, donnée à titre purement illustratif et nullement limitatif, en référence au dessin annexé, lequel comporte une figure unique représentant une vue schématique en coupe du dispositif de mesure objet de l'invention.

Sur la figure, on voit le dispositif de l'invention, portant la référence générale 1, qui est monté au niveau d'une ouverture 2 pratiquée dans la paroi ou virole externe 4 du générateur de vapeur. Ce dispositif se compose essentiellement d'un corps de sonde 6 ayant en gros la forme d'un tube cylindrique creux qui est maintenu fixe par rapport à la virole externe 4 du générateur de vapeur grâce à des moyens qui seront précisés ultérieurement au cours de cette description. A l'intérieur de ce corps de sonde 6 se trouve la sonde proprement dite 8 dont une extrémité 10 est en contact avec la virole ou paroi interne 12 du générateur. Au voisinage de l'extrémité 10 de la sonde proprement dite 8 se trouve une série d'orifices de prise de pression 14 répartis entre la virole interne 12 et la virole externe 4 de manière à pouvoir établir une courbe de profil de vitesses dans tout l'espace annulaire 16, y compris au voisinage immédiat des parois 4 et 12.

L'étanchéité entre le corps de sonde 6 et la sonde proprement dite 8 est assurée au moyen d'un soufflet élastique 18 entourant la sonde proprement dite 8, une première extrémité 17 de ce soufflet étant fixée sur cette sonde 8 tandis que son autre extrémité 19 est fixée à une pièce de jonction 20 elle-même vissée de manière étanche sur le corps de sonde 6. En plus de sa première fonction qui consiste à assurer l'étanchéité entre le corps de sonde 6 et la sonde proprement dite 8, le soufflet 18, du fait de son élasticité, pousse la sonde proprement dite 8 en direction de la paroi interne 12 du générateur de vapeur et permet de maintenir l'extrémité 10 de la sonde en contact permanent avec la paroi 12 quelles que soient les dilatations et les vibrations subies par cette dernière puisque l'autre extrémité 19 du soufflet 18 est fixée au corps de sonde 6 qui, lui-même, est maintenu fixe par rapport à la virole externe 4 du générateur. Ainsi, la distance entre la paroi 12 et celui des orifices 14 qui est le plus proche de cette paroi reste constante et on peut mesurer la vitesse d'écoulement du fluide en un point très proche de la paroi quelles que soient les dilatations ou vibrations subies par cette dernière.

Sur la figure, on voit également que le dispositif comporte une pièce intermédiaire ou bossage d'instrumentation 22 fixée de manière étanche sur la paroi externe 4 du générateur, par exemple au moyen d'un cordon de soudure 23. Une partie du bossage d'instrumentation 22, située dans l'ouverture 2 pratiquée dans la virole externe 4 du générateur, a la forme d'un tube-gaine 24 définissant un passage 25 pour la sonde proprement dite 8. L'intérêt de cette disposition est de permettre un guidage précis avec des tolérances étroites de la sonde 8 dans l'espace 25, alors qu'étant donné l'épaisseur de la virole externe 4, l'ouverture 2 n'est généralement pas usinée avec une haute précision. On voit encore sur la figure que la partie de la pièce 22 située à l'extérieur du générateur de vapeur comporte un logement 26 apte à recevoir le corps de sonde 6. Ce dernier est maintenu dans le logement 26 grâce à un presse-étoupe 28, l'étanchéité étant assurée par un joint 29. Ainsi, le corps de sonde 6 est bien maintenu fixe par rapport à la virole externe 4 puisque le presse-étoupe 28 le bloque dans la pièce 22 qui est elle-même soudée à la paroi 4.

Le dispositif comporte encore une tête de mesure 30 fixée de manière étanche sur une pièce de jonction 20, elle-même vissée de manière étanche sur le corps de sonde 6, la tête de mesure 30 étant munie d'un certain nombre de conduits 31 débouchant dans des orifices de sortie 32 sur lesquels peut être monté un raccord de prise de pression tel que 33. Les raccords 33 sont reliés à un dispositif de mesure 35.

On voit encore sur la figure que la sonde 8 est percée de toute une série de canaux tels que 15 permettant de relier chacun des orifices de prise de pression 14 à l'un des orifices de sortie 32 ménagés dans la tête de sonde 30 grâce à des tuyaux souples tels que le tuyau 38 visible sur la figure à l'intérieur de la pièce de jonction 20. Cette disposition a pour but de faciliter le montage de l'appareil: en effet, il est facile de relier chacun des conduits 15 à l'un des conduits 31 de la tête de sonde à l'aide des tubes capillaires 38 avant que cette dernière ne soit soudée de manière définitive sur la pièce de jonction 20, les tubes capillaires 38 étant alors repliés à l'intérieur de l'espace interne 37 de la pièce de jonction 20.

Le dispositif selon l'invention présente des avantages particulièrement intéressants puisque l'extrémité de la sonde est appliquée en permanence contre la paroi interne 12 du générateur de vapeur, ce qui permet de connaître à tout instant la pression, donc la vitesse, au voisinage immédiat de cette paroi et de déterminer par exemple l'épaisseur d'une éventuelle couche laminaire.

Enfin, si ce dispositif a été conçu pour étudier l'écoulement dans l'espace annulaire d'un générateur de vapeur, il est bien entendu qu'il peut avoir d'autres applications, notamment dans toutes les installations où il est nécessaire de connaître les caractéristiques d'un écoulement fluide au voisinage immédiat d'une paroi.

## Revendications

1. Dispositif pour mesurer la vitesse d'écoulement d'un fluide dans l'espace annulaire (16) d'un générateur de vapeur, ledit espace (16) étant limité par une virole interne (12) et une virole externe (4), du type comportant un corps (6) de sonde maintenu fixe par rapport à la virole externe (4) et à l'intérieur duquel est placée la sonde (8) proprement dite, caractérisé en ce qu'il comporte un soufflet élastique (18) entourant la sonde (8) proprement dite et dont une première extrémité (17) est fixée à la sonde (8) proprement dite tandis que son autre extrémité (19) est fixée au corps (6) de sonde, ledit soufflet (18) étant monté de telle sorte qu'il applique constamment une extrémité (10) de la sonde (8) proprement dite contre la virole interne (12).

2. Dispositif selon la revendication 1, caractérisé en ce qu'il comporte un bossage (22) d'instrumentation fixé sur la virole externe (4) du générateur de vapeur au niveau d'une ouverture (2) pratiquée dans celle-ci, ledit bossage (22) d'instrumentation comportant une ouverture (25) pour le passage de la sonde (8) proprement dite.

3. Dispositif selon la revendication 2, caractérisé en ce qu'il comporte des moyens de fixation permettant de fixer le corps (6) de sonde sur le bossage (22) d'instrumentation.

4. Dispositif selon la revendication 3, caractérisé en ce que lesdits moyens de fixation comprennent un presse-étoupe (28) apte à maintenir le corps (6) de sonde à l'intérieur d'un logement (26) ménagé dans le bossage (22) d'instrumentation.

5. Dispositif selon l'une des revendications 1 à 4, caractérisé en ce que la sonde (8) proprement dite comporte, au voisinage de son extrémité (10) appliquée contre la virole interne (12), plusieurs orifices (14) de prise de pression répartis entre la virole interne (12) et la virole externe (4).

6. Dispositif selon la revendication 5, caractérisé en ce que la sonde (8) proprement dite comporte plusieurs conduits (15) permettant de relier chaque orifice (14) de prise de pression à un orifice (32) de sortie.

## Claims

1. Apparatus for measuring the flow velocity of a fluid in an annular space (16) of a vapour generator, said space (16) being delimited by an inner sleeve (12) and an outer sleeve (4), of the type comprising a sensor body (6) fixedly held with respect to the outer sleeve (4) and within which is placed the sensor itself (8), characterised in that it comprises an elastic bellows (18) surrounding the sensor itself (8), and a first end (17) of which is fixed to the sensor itself (8) while the other end (19) is fixed to the sensor body (6), said bellows (18) being mounted such that it constantly urges one end (10) of the sensor itself (8) against the inner sleeve (12).

2. Apparatus according to Claim 1, characterised in that it comprises an instrument holder (22) located on the outer sleeve (4) of the vapour generator level with an opening (2) formed therein, said instrument holder (22) comprising an opening (25) for passage of the sensor itself (8).

3. Apparatus according to Claim 2, characterised in that it comprises fixing means, permitting fixation of the sensor body (6) on the instrument holder (22).

4. Apparatus according to Claim 3, characterised in that said fixation means comprise a thimble (28) adapted to hold the sensor body (6) within a housing (26) formed in the instrument holder (22).

5. Apparatus according to any one of Claims 1 to 4, characterised in that the sensor itself (8) has, near its end (10) urged against the inner sleeve (12), a plurality of pressure-taking orifices (14) distributed between the inner sleeve (12) and the outer sleeve (4).

6. Apparatus according to Claim 5, characterised in that the sensor itself (8) comprises a plurality of conduits (15) for connecting each pressure-taking orifice (14) to an outlet orifice (32).


## Patentansprüche

1. Vorrichtung zur Messung der Strömungsgeschwindigkeit eines Fluids in einem Ringraum (16) eines Dampfgenerators, wobei der Raum (16) von einem inneren Mantel (12) und von einem äusseren Mantel (4) begrenzt ist, von der Art, welche einen Sondenkörper (6) umfasst, der in bezug auf den äusseren Mantel (4) festgehalten ist und in dessen Innerem die eigentliche Sonde (8) angeordnet ist, dadurch gekennzeichnet, dass die Vorrichtung einen elastischen Balgen (18) aufweist, der die eigentliche Sonde (8) umgibt und weist, dessen eines erste Ende (17) an der eigentlichen Sonde (8) befestigt ist, während sein anderes Ende (19) an dem Sondenkörper (6) befestigt ist, dass der Balgen (18) derart angebracht ist, dass er fortlaufend ein Ende (10) der eigentlichen Sonde (8) gegen den inneren Mantel (12) drückt.

2. Vorrichtung nach Anspruch 1, dadurch gekennzeichnet, dass sie einen Instrumentierungsvorsprung (22) aufweist, der an dem äusseren Mantel (4) des Dampfgenerators auf der Höhe einer in jenem ausgebildeten Öffnung (2) befestigt ist, und der Instrumentierungsvorsprung (22) eine Öffnung (25) für den Durchgang der eigentlichen Sonde (8) aufweist.

3. Vorrichtung nach Anspruch 2, dadurch gekennzeichnet, dass sie Befestigungsmittel umfasst, mit denen der Sondenkörper (6) an dem Instrumentierungsvorsprung (22) befestigbar ist.

4. Vorrichtung nach Anspruch 3, dadurch gekennzeichnet, dass die Befestigungsmittel eine Stopfbuchse (28) umfassen, die geeignet ist, den Sondenkörper (6) im Inneren einer Aufnahme (26) zu halten, die in dem Instrumentierungsvorsprung (22) ausgebildet ist.

5. Vorrichtung nach einem der Ansprüche 1 bis 4, dadurch gekennzeichnet, dass die eigentliche Sonde (8) in der Nähe ihres gegen den inneren Mantel (12) gedrückten Endes (10) mehrere Druckanzapfungsöffnungen (14) aufweist, die zwischen dem inneren Mantel (12) und dem äusseren Mantel (4) verteilt sind.

6. Vorrichtung nach Anspruch 5, dadurch gekennzeichnet, dass die eigentliche Sonde (8) mehrere Leitungen (15) aufweist, mit denen jede Druckanzapföffnung (14) mit einer Ausgangsöffnung (32) verbindbar ist.